# EUROPEAN PATENT APPLICATION

(11) **EP 3 960 488 A1**
(43) Date of publication of application: **02.03.2022**
(21) Application number: 21193723.0
(22) Date of filing: 30.08.2021
(51) Int. Cl.: B60B 1/04, B60B 1/14, B60B 21/06

(54) **TUBELESS SPOKED WHEEL FRAME**

(30) Priority: 31.08.2020 IT 202000020683
(71) Applicant: V.G.V. S.r.l., 25121 Brescia (IT)
(72) Inventor: ALBERIO, Fabio, I-25121 BRESCIA (IT); FANTOZZI, Lorenzo, I-25121 BRESCIA (IT)
(74) Representative: Leihkauf, Steffen Falk

(57) **Abstract**

A tubeless spoked wheel structure (1) for a vehicle, wherein said spoked wheel structure (1) defines a wheel rotation axis (R-R) and comprises: an annular wheel channel (10) which is coaxial with said wheel rotation axis (R-R) and defining a radially outer channel surface (11), said annular wheel channel (10) being configured to accommodate a tire (100) to form a sealed annular chamber (101) between said radially outer channel surface (11) and said tire (100); a wheel hub (30) arranged centrally with respect to said annular wheel channel (10) adapted to be pivotally mounted with respect to said vehicle; a plurality of wheel spokes (40) mounted interposed and stretched between said wheel hub (30) and said annular wheel channel (10), wherein each wheel spoke (40) of said plurality defines a proximal spoke end (41) fixed to said hub (30) and an opposite distal spoke end (42) fixed to said annular wheel channel (10), and wherein each wheel spoke (40) of said plurality comprises an elongated spoke shaft (43) which extends along a spoke axis (S-S) between said proximal spoke end (41) and said distal spoke end (42), wherein said annular wheel channel (10) has a plurality of spoke holes (12), said spoke holes (12) being holes passing through said channel (10) and opened in said radially outer channel surface (11), wherein each through hole (12) of said plurality accommodates and retains therein one said distal end (42) of a respective spoke (40) of said plurality; a plurality of sealing elements (50), each sealing element of said plurality comprising a sealing material adapted to solidify once applied, said sealing material being directly either deposited or sprayed onto each said distal spoke end (42) and onto a respective annular portion (13) of said radially outer surface (11) of the channel arranged about each said distal spoke end (42) to cover continuously only each said distal spoke end (42) and said respective annular portion (13) of said radially outer surface (11) of the channel, avoiding the invasion of the distal spoke end of the remaining spokes of said plurality.

## Description

### Field of the invention

The present invention relates to a spoked wheel structure of the tubeless type for a wheeled vehicle, in particular for a motor vehicle, or motorcycle, or cycle in general. The wheel structure comprises an annular wheel rim, which externally forms a rim channel which is configured to be coupled to a tire, a wheel hub which is central with respect to the rim, and a plurality of spokes which connect and keep the wheel rim and the hub mutually in place. The spokes are engaged with the wheel rim through corresponding through holes made in the wheel rim along the channel.

### Background art

In the field of tubeless spoked wheels, the problem of ensuring a fluid seal through the various components which delimit an annular chamber for pressurized air defined by the rim channel and the tire is particularly important.

In particular, it is necessary to ensure that there is no air leakage between the wheel components assembled together.

In spoked wheels in which the spokes are assembled to the wheel rim by passing them through corresponding through holes in the wheel rim, the need is felt to avoid any air leakage through such holes between the outer side surface of the spoke and the inner side surface of the corresponding hole.

Generally, an enlarged spoke end head, made in one piece with the spoke shaft or assembled thereto, is abuttingly engaged in an undercut manner inside the wheel rim against the surface of the rim channel about the through hole.

Therefore, the need is also felt to avoid any air leakage between the enlarged end head of the spoke and the surface of the rim channel about the hole.

In other words, the need is felt to completely seal the wheel rim and spoke assembly at the through hole of the wheel rim in which the spoke is engaged.

Some attempts to meet this need are known but are not free from drawbacks.

In particular, the technique of interposing a deformable sealing bushing acting as a gasket, or another elastic seal, such as of the O-ring type, between the spoke and the hole, is known.

This known technique has the disadvantage of needing a bushing to be applied with precision to each spoke before assembly and each spoke to be then fitted with precision into a respective hole, paying attention to the correct adherence of the bushing to both the spoke and the hole.

Furthermore, the application of the gasket requires the surfaces of both the spoke and the wheel rim to be thoroughly cleaned beforehand to facilitate the adherence of the gasket and the maintenance of the seal.

It follows that this known technology has the disadvantage of requiring a rather long manufacturing time and a high risk of faults, as well as requiring personnel capable of performing precision work.

Another attempt to meet the aforesaid needs includes depositing a continuous circumferential band of sealing material along the radially outer surface of the rim channel to cover the assembly zones between spokes and channel.

Such a continuous band, while greatly reducing the manufacturing time, has additional disadvantages.

In particular, it should be noted that the radially outer surface of the rim channel is configured to accommodate the two circumferential edges of the tire by positive coupling to form a seal between the rim channel and the tire.

The continuous annular deposition has a very invasive effect on the area known as the "well", i.e., the area referred to in standards to accommodate the tire bead during assembly. By invading the channel well area, the continuous annular deposition of the known technique makes the tire assembly difficult, especially when the rim has a narrow cross-section.

Furthermore, such a band of sealing material is continuous and seamlessly covers the coupling zones between spokes and rim channel, thus requiring a high amount of sealing material, with the disadvantageous consequence of adding weight to the wheel, with negative effects on the dynamic behavior thereof, even more accentuated if the wheel belongs to a high-performance sports vehicle.

Therefore, the need is felt to provide a tubeless-type spoked wheel structure having the spokes engaged in corresponding through-holes in the channel, and a method to make it, which allows to meet the conflicting needs of rapid manufacturing and lightness of the wheel structure at the same time, ensuring a perfect seal against leakages of the pressurized fluid contained in the wheel.

### Summary of the invention

It is the object of the present invention to devise and provide a spoked wheel structure which allows to meet the aforesaid needs and overcome at least partially the above drawbacks with reference to the prior art.

In particular, it is an object of the present invention to provide a tubeless spoked wheel structure which allows to meet the conflicting needs of rapid manufacturing and lightness of the wheel structure at the same time, ensuring a perfect seal against leakages of the pressurized fluid contained in the wheel.

It is another object of the present invention to provide a tubeless spoked wheel structure in which the seal against the leakage of pressurized fluid at the assembly between spokes and respective through-holes in the channel is ensured, and in which such a result is achieved by a simplified, faster, and more reliable and cost-effective assembly than the known technique of mounting seals of any type between the spoke and respective hole in the channel.

It is a further object of the present invention to provide a tubeless spoked wheel structure which allows to ensure the seal against the leakages of pressurized fluid while avoiding the need to thoroughly clean the surfaces in the assembly zone between spoke and channel.

It is another object of the present invention to provide a tubeless spoked wheel structure which ensures to avoid the undesired loosening of the distal end of the spoke with respect to the channel.

It is another object of the present invention to provide a spoked wheel structure which minimizes the weight of the sealing material required to ensure the sealing in the assembly zone between spokes and channel compared to the use of a continuous annular band.

It is yet another object of the present invention to provide a method for making tubeless-type spoked wheel structure which allows to meet the conflicting needs of rapid manufacturing and lightness of the wheel structure at the same time, ensuring a perfect seal against leakages of the pressurized fluid contained in the wheel.

These and further objects and advantages are achieved by a tubeless spoked wheel structure and a method for making it according to the independent claims.

The tubeless spoked wheel structure according to the claim comprises a plurality of portions of a sealing material, each portion of said plurality being deposited only at a respective distal end of the spoke continuously covering and encompassing said distal end of the spoke and an adjacent annular portion of said radially outer surface of the channel arranged about said distal end of the spoke, thereby forming a plurality of sealing points, or sealing elements, directly formed at the distal ends of spoke mounted in respective holes passing through the annular wheel channel, and thus in the wheel rim.

The localized-only deposition in points of the portions of sealing material, although being arranged in the well, avoids invading it up to the contact areas between tire and channel.

The result is that the point deposition allows an absolutely easy mounting of the tire which is comparable to the mounting of a wheel with a completely free well.

Further objects, solutions, and advantages are present in the embodiments described below and claimed in the dependent claims.

### Brief description of the drawings

The invention will be disclosed below by describing some embodiments thereof, given by way of non-limiting example, with reference to the accompanying drawings, in which:

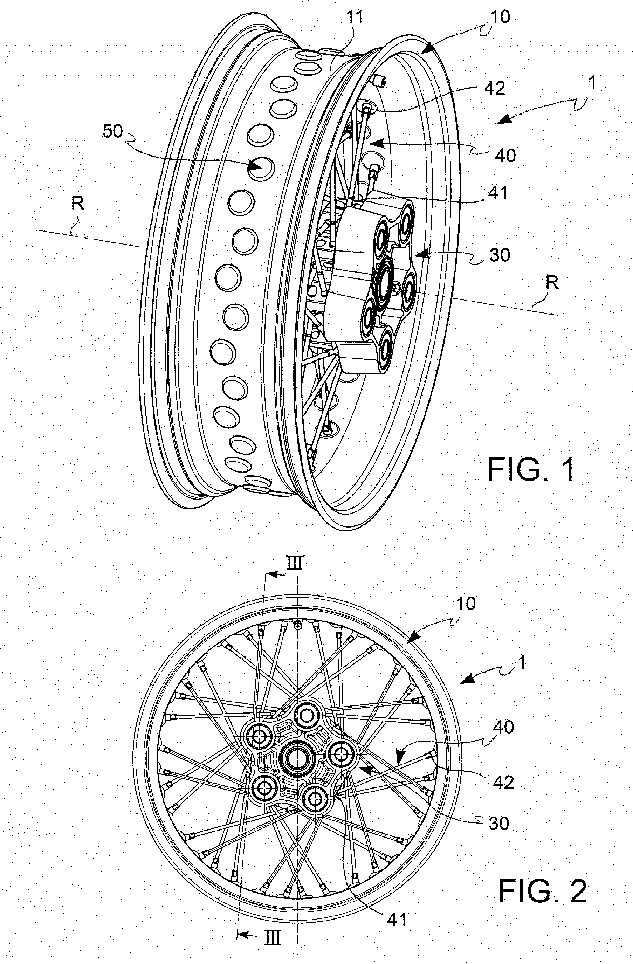

- figure 1 shows an isometric view of a tubeless spoked wheel structure according to the invention;

- figure 2 shows a side view of the spoked wheel structure in figure 1;

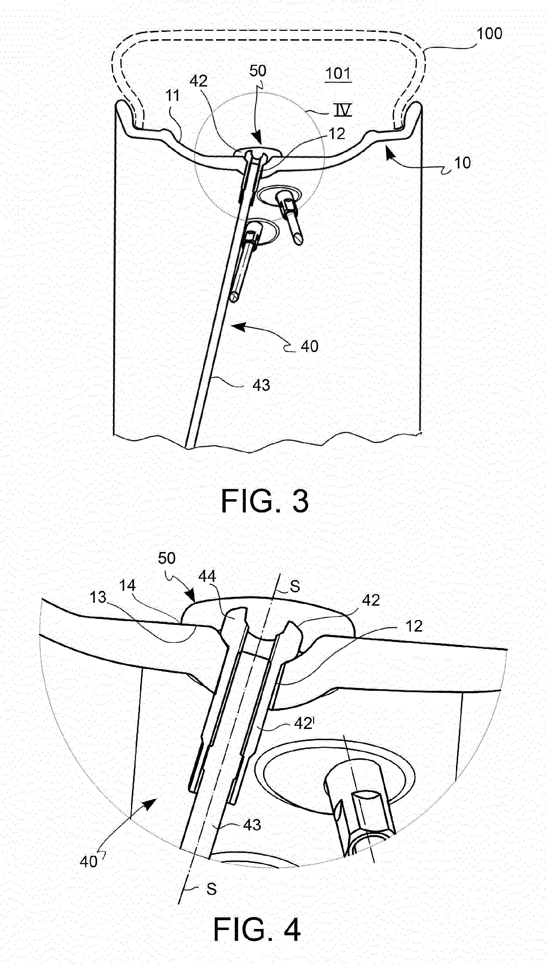

- figure 3 shows a partial section view of the wheel structure in figure 1, obtained through a section plane III passing through the spoke axis parallel to the rotation axis of the wheel;

- figure 4 shows an enlargement of detail IV in figure 3.

### Description of the preferred embodiments

With reference to the figures, a tubeless spoked wheel structure for a vehicle according to the invention is indicated by reference numeral 1 as a whole.

Such a wheel structure defines a wheel rotation axis R-R about which the wheel is adapted to rotate.

Such a structure comprises an annular wheel channel 10, or rim, coaxial with said wheel rotation axis R-R and defining a radially outer channel surface 11.

Such an annular wheel channel 10 is configured to accommodate a tire 100 to form a sealed annular chamber 101 between the radially outer surface of channel 11 and the tire 100.

Furthermore, the wheel structure comprises a wheel hub 30 arranged centrally with respect to the annular wheel channel 10 adapted to be pivotally mounted with respect to the vehicle.

Furthermore, the wheel structure comprises a plurality of wheel spokes 40 mounted interposed and stretched between said wheel hub 30 and said annular wheel channel 10, where each wheel spoke 40 of the plurality defines a proximal spoke end 41 fixed to said hub 30 and an opposite distal spoke end 42 fixed to the annular wheel channel 10, and where each wheel spoke 40 of said plurality comprises an elongated spoke shaft 43 which extends along a spoke axis S-S between said proximal spoke end 41 and the distal spoke end 42.

The annular wheel channel 10 has a plurality of spoke holes 12, said spoke holes 12 being holes passing through said channel 10 and opened in said radially outer channel surface 11, where each through hole 12 of said plurality accommodates and retains a distal end 42 of a respective spoke 40 of said plurality therein.

Furthermore, the wheel structure 1 comprises a plurality of sealing elements 50, each sealing element 50 of said plurality comprising a sealing material adapted to solidify once applied, said sealing material being directly either deposited or sprayed onto each said distal spoke end 42 mounted in said channel and onto a respective annular portion 13 of said radially outer surface 11 of the channel arranged about each said distal spoke end 42, to cover continuously only each said distal spoke end 42, and said respective annular portion 13 of said radially outer surface 11 of the channel, avoiding the invasion of the distal spoke end, mounted in said channel, of the remaining spokes of said plurality.

According to an embodiment, the sealing material comprises a polymer material.

According to an embodiment, the sealing material either is or comprises a polyurethane casting compound, preferably a polyurethane casting resin.

According to an embodiment, the casting polyurethane compound, or casting polyurethane resin, is obtained by mixing a first component and a second component together, which after mixing results in a chemical reaction yielding the curing of the compound or resin.

According to an embodiment, the first component comprises multifunctional alcohols, or polyols, and the second component comprises aromatic isocyanates, or derivatives of aromatic isocyanates.

According to an embodiment, the sealing material is, for example, the material referred to as "FERMADUR A-120-1-VP1 / FDUR B-4" manufactured by Henkel^{®}.

According to an embodiment, the sealant material has a partial solidification or drying time of about 60 seconds, which allows to move the wheel structure without dripping.

According to an embodiment, the sealant material has a total solidification or drying time of about 24 hours.

According to an embodiment, the annular portion 13 of said radially outer surface 11 of the channel arranged about said distal spoke end 42 has a radial dimension between 4 mm and 15 mm, preferably between 5 mm and 15 mm.

According to an embodiment, the annular portion 13 of said radially outer surface 11 is substantially shaped as a circular crown, coaxial with the spoke axis S-S.

According to an embodiment, the annular portion having a substantially circular crown shape has a difference between the outer radius and the inner radius of between 4 mm and 15 mm, preferably between 5 mm and 15 mm.

According to an embodiment, the outer diameter of each annular portion of said radially outer surface, and thus of each sealing element 50, is less than about 30 mm.

According to an embodiment, the sealing elements 50 of said plurality are dome-shaped, or spherical-cap-shaped, or drop-shaped, or button-shaped.

According to an embodiment, the sealing elements 50 cover the distal spoke end 42 according to a thickness, measured along the spoke axis S-S, comprised between 0.5 mm and 5 mm, preferably between 1 mm and 2 mm.

According to an embodiment, the distal spoke end 42 comprises an enlarged head 44 adapted to be engaged in an undercut manner against said radially outer surface 11 of said channel.

According to an embodiment, the distal spoke end 42 is made in one piece with said shaft 43, or said distal spoke end 42 is formed of an end fixing element 42', or nipple, removably mounted to said shaft 43.

According to another aspect of the present invention, the aforesaid purposes and advantages are met by a manufacturing method for manufacturing a tubeless spoked wheel structure 1 for a vehicle.

In particular, such a method allows to make a spoked wheel structure as described above.

The wheel structure 1 defines a wheel rotation axis R-R.

Such a wheel structure 1 comprises an annular wheel channel 10 which is coaxial with said wheel rotation axis R-R and defining a radially outer channel surface 11, said annular wheel channel 10 being configured to accommodate a tire 100 to form a sealed annular chamber 101 between said radially outer channel surface 11 and said tire 100.

Furthermore, the wheel structure comprises a wheel hub 30 arranged centrally with respect to the annular wheel channel 10 to be pivotally mounted with respect to said vehicle.

The wheel structure 1 comprises a plurality of wheel spokes 40 mounted interposed and stretched between said wheel hub 30 and said annular wheel channel 10, where each wheel spoke 40 of said plurality defines a proximal spoke end 41 fixed to said hub 30 and an opposite distal spoke end 42 fixed to said annular wheel channel 10, and where each wheel spoke 40 of said plurality comprises an elongated spoke shaft 43 which extends along a spoke axis S-S between said proximal spoke end 41 and said distal spoke end 42.

Said annular wheel channel 10 has a plurality of spoke holes 12, said spoke holes 12 being holes passing through said channel 10 and open in said radially outer channel surface 11, where each through hole 12 of said plurality accommodates and retains a distal end 42 of a respective spoke 40 of said plurality therein.

The aforesaid manufacturing method comprises a step of either depositing or spraying a predetermined amount of a sealing material adapted to solidify once applied, directly onto each said distal spoke end 42, and onto a respective annular portion 13 of said radially outer surface 11 of the channel arranged about each said distal spoke end 42 to form a plurality of sealing elements 50 at each distal spoke end 42, said predetermined amount of sealing material being dimensioned to cover continuously only each said distal spoke end 42 mounted in said channel and said respective annular portion 13 of said radially outer surface 11 of the channel, thus avoiding the invasion of the distal spoke end, mounted in said channel, of the remaining spokes of said plurality.

The method further comprises a step of waiting for the at least partial solidification of said predetermined amount of sealing material.

According to an embodiment, the step of waiting is a partial solidification wait of about 60 seconds.

The wheel structure can thus be moved without dripping.

According to an embodiment, the step of waiting for solidification is a total solidification wait of about 24 hours.

According to an embodiment, the depositing or spraying step is carried out according to a spiral path which starts from a diametrically outer point of said annular portion 13 of said radially outer surface 11 of the channel about said distal spoke end 42, to a substantially central point of said distal spoke end 42.

According to an embodiment, the depositing or spraying step is carried out by injecting said predetermined amount of sealing material into a concave mold previously taken into contact with said annular portion 13 of said radially outer surface 11 of the channel about said distal spoke end 42, at an outer periphery 14 of said annular portion 13.

According to an embodiment, the depositing or spraying step is carried out by a manual or robotic spraying head comprising a spraying nozzle for depositing or spraying said predetermined amount of sealing material 50.

According to an embodiment, the aforesaid method comprises a step of positioning said wheel structure 1 on a support to allow the rotation of said wheel structure 1 about the wheel rotation axis R-R.

According to an embodiment, the method comprises a step of rotating said wheel structure 1 about the wheel rotation axis R-R on said support with respect to a reference angular position of said wheel structure 1 to position a first distal spoke end 42 of said plurality in a position adapted to carry out said depositing or spraying step at said first distal spoke end 42 and carrying out said spraying step.

According to an embodiment, the method comprises a step of rotating said wheel structure 1 about the wheel rotation axis R-R in successive, predetermined angular steps to position each distal spoke end 42 each time in said position adapted to carry out said depositing or spraying step, and carrying out said depositing or spraying step each time on each said distal end 42 in said position.

According to an embodiment, the angular position of said wheel structure 1 about the wheel rotation axis R-R with respect to a reference angular position is detected by manual or automated optical vision means.

In order to meet contingent needs, those skilled in the art can make changes and adaptations to the above-described embodiments of the device or can replace elements with others which are functionally equivalent without departing from the scope of the following claims.

Each of the features described above as belonging to a possible embodiment may be implemented irrespective of the other embodiments described.

It is worth noting that the figures are not necessarily in scale.

All the features described herein and/or in any step of the method described herein may be combined in any combination, except for the combinations in which at least some of such features and/or steps are mutually exclusive.

## Claims

1. A tubeless spoked wheel structure (1) for a vehicle, wherein said spoked wheel structure (1) defines a wheel rotation axis (R-R) and comprises:
- an annular wheel channel (10) which is coaxial with said wheel rotation axis (R-R) and defining a radially outer channel surface (11), said annular wheel channel (10) being configured to accommodate a tire (100) to form a sealed annular chamber (101) between said radially outer channel surface (11) and said tire (100);
- a wheel hub (30) arranged centrally with respect to said annular wheel channel (10) adapted to be pivotally mounted with respect to said vehicle;
- a plurality of wheel spokes (40) mounted interposed and stretched between said wheel hub (30) and said annular wheel channel (10), wherein each wheel spoke (40) of said plurality defines a proximal spoke end (41) fixed to said hub (30) and an opposite distal spoke end (42) fixed to said annular wheel channel (10), and wherein each wheel spoke (40) of said plurality comprises an elongated spoke shaft (43) which extends along a spoke axis (S-S) between said proximal spoke end (41) and said distal spoke end (42),
- wherein said annular wheel channel (10) has a plurality of spoke holes (12), said spoke holes (12) being holes passing through said channel (10) and opened in said radially outer channel surface (11), wherein each through hole (12) of said plurality accommodates and retains a distal end (42) of a respective spoke (40) of said plurality therein;
- a plurality of sealing elements (50), each sealing element of said plurality comprising a sealing material adapted to solidify once applied, said sealing material being directly deposited or sprayed onto said distal spoke end (42) mounted in said channel and onto a respective annular portion (13) of said radially outer surface (11) of the channel arranged about each said distal spoke end (42), so as to cover continuously only each said distal spoke end (42) mounted in said channel, and said respective annular portion (13) of said radially outer surface (11) of the channel,
avoiding the invasion of the distal spoke end, mounted in said channel, of the remaining spokes of said plurality.

2. A spoked wheel structure (1) according to claim 1, wherein the sealing material either is or comprises a polyurethane casting compound, preferably a polyurethane casting resin.

3. A spoked wheel structure according to at least one of the preceding claims, wherein the annular portion (13) of said radially outer surface (11) of the channel arranged about said distal spoke end (42) has a radial dimension between 4 mm and 15 mm, preferably between 5 mm and 15 mm.

4. A spoked wheel structure (1) according to claim 1 or 2, wherein said annular portion (13) of said radially outer surface (11) is substantially shaped as a circular crown, coaxial with the spoke axis (S-S).

5. A spoked wheel structure (1) according to at least one preceding claim, wherein the sealing elements (50) of said plurality are dome-shaped, or spherical-cap shaped, or drop-shaped, or button-shaped.

6. A spoked wheel structure (1) according to at least one preceding claim, wherein the sealing elements (50) cover said distal spoke end (42) according to a thickness, measured along the spoke axis (S-S), comprised between 0.5 mm and 5 mm, preferably between 1 mm and 2 mm.

7. A manufacturing method for manufacturing a tubeless spoked wheel structure (1) for a vehicle, said wheel structure (1) defining a wheel rotation axis (R-R) and comprising:
- an annular wheel channel (10) which is coaxial with said wheel rotation axis (R-R) and defining a radially outer channel surface (11), said annular wheel channel (10) being configured to accommodate a tire (100) to form a sealed annular chamber (101) between said radially outer channel surface (11) and said tire (100);
- a wheel hub (30) arranged centrally with respect to said annular wheel channel (10) adapted to be pivotally mounted with respect to said vehicle;
- a plurality of wheel spokes (40) mounted interposed and stretched between said wheel hub (30) and said annular wheel channel (10), wherein each wheel spoke (40) of said plurality defines a proximal spoke end (41) fixed to said hub (30) and an opposite distal spoke end (42) fixed to said annular wheel channel (10), and wherein each wheel spoke (40) of said plurality comprises an elongated spoke shaft (43) which extends along a spoke axis (S-S) between said proximal spoke end (41) and said distal spoke end (42),
- wherein said annular wheel channel (10) has a plurality of spoke holes (12), said spoke holes (12) being holes passing through said channel (10) and opened in said radially outer channel surface (11), wherein each through hole (12) of said plurality accommodates and retains a distal end (42) of a respective spoke (40) of said plurality therein;
wherein said method comprises the steps of:
- either depositing or spraying a predetermined amount of a sealing material adapted to solidify once applied, directly onto each said distal spoke end (42), mounted in said channel, and onto a respective annular portion (13) of said radially outer surface (11) of the channel arranged about each said distal spoke end (42) to form a plurality of sealing elements (50) at each distal spoke end (42), said predetermined amount of sealing material being dimensioned so as to cover continuously only said distal spoke end (42) and said respective annular portion (13) of said radially outer surface (11) of the channel, thus avoiding the invasion of the distal spoke end, mounted in said channel, of the remaining spokes of said plurality;
- waiting for the at least partial solidification of said predetermined amount of sealing material (50).

8. A method according to claim 7, wherein said depositing or spraying step is carried out according to a spiral path which starts from a diametrically outer point of said annular portion (13) of said radially outer surface (11) of the channel about said distal spoke end (42), up to a substantially central point of said distal spoke end (42).

9. A method according to claim 7, wherein said spraying or depositing step is carried out by injecting said predetermined amount of sealing material (50) into a concave mold previously brought into contact with said annular portion (13) of said radially outer surface (11) of the channel about said distal spoke end (42), at an outer periphery (14) of said annular portion (13).

10. A method according to at least one claim from 7 to 9, wherein said depositing or spraying step is carried out by a robotic or manual spraying head comprising a spraying nozzle for depositing or spraying said predetermined amount of sealing material (50).

11. A method according to at least one claim from 7 to 10, comprising the steps of:
- positioning said wheel structure (1) on a support to allow the rotation of said wheel structure (1) about the wheel rotation axis (R-R);
- rotating said wheel structure (1) about the wheel rotation axis (R-R) on said support with respect to a reference angular position of said wheel structure (1) to position a first distal spoke end (42) of said plurality in a position adapted to carry out said spraying step at said first distal spoke end (42), and carrying out said spraying step;
- rotating said wheel structure (1) about the wheel rotation axis (R-R) in successive, predetermined angular steps to position each distal spoke end (42) each time in said position adapted to carry out said spraying step, and carrying out said spraying step each time on each distal end (42) in said position.

12. A method, according to claim 11, wherein the angular position of said wheel structure (1) about the wheel rotation axis (R-R) with respect to a reference angular position is detected by manual or automated optical vision means.
